# EUROPÄISCHE PATENTSCHRIFT

(11) **EP 3 138 304 B1**
(45) Veröffentlichungstag und Bekanntmachung des Hinweises auf die Patenterteilung: **15.01.2020**
(21) Anmeldenummer: 15715248.9
(22) Anmeldetag: 09.04.2015
(51) Int. Cl.: H04W 4/02, H04W 84/18, H04W 4/00, H04W 4/46, H04W 4/44

(54) **ZEITSTEMPELERZEUGUNG OHNE GNSS-SIGNAL**
TIME STAMP GENERATION WITHOUT GNSS SIGNAL
GÉNÉRATION D'UN HORODATAGE SANS SIGNAL GNSS

(30) Priorität: 30.04.2014 DE 102014208266
(43) Veröffentlichungstag der Anmeldung: 08.03.2017
(73) Patentinhaber: Continental Teves AG & Co. OHG, 60488 Frankfurt am Main (DE)
(72) Erfinder: ZALEWSKI, Michael, 60438 Frankfurt am Main (DE); SCHERPING, Richard, 65835 Liederbach am Taunus (DE); KRETSCHMAR, Sven, 65462 Gustavsburg (DE); BAUCH, Nils, 65510 Idstein (DE)
(86) Internationale Anmeldenummer: PCT/EP2015/057671
(87) Internationale Veröffentlichungsnummer: WO 2015/165704

(56) Entgegenhaltungen:
- WO-A1-2014/027072
- DE-A1-102009 045 748
- DE-A1-102012 216 192

## Beschreibung

Die Erfindung betrifft ein Verfahren zum Bereitstellen eines Zeitstempels, eine Steuervorrichtung zur Durchführung des Verfahrens und ein Fahrzeug mit der Steuervorrichtung.

Aus der WO 2010 / 139 526 A1 ist ein Car2X genanntes mobiles Ad-hoc-Netz bekannt, dessen Knoten bestimmte Straßenverkehrsteilnehmer wie Fahrzeuge oder andere Objekte im Straßenverkehr, wie Ampeln sind. Über diese Netzwerke können den am Car2X-Netzwerk beteiligten Straßenverkehrsteilnehmern Hinweise über Straßenverkehrszustände, wie Unfälle, Staus, Gefahrensituationen, ... bereitgestellt werden.

In der DE 10 2009 045 748 A1 ist ein Verfahren zur Ermittlung des Status einer drahtlosen C2X-Kommunikation eines Fahrzeugs zu seiner Umgebung beschrieben, bei der eine Kommunikationseinheit dazu eingerichtet ist, von Kommunikationseinheiten in der Umgebung als Funkbotschaften ausgesendete Daten zu empfangen, wobei durch Analyse von in den Funkbotschaften enthaltenen Informationen der Status der C2X-Kommunikation bestimmt und in einer Mensch-Maschine-Schnittstelle angezeigt wird.

Es ist Aufgabe die Nutzung derartiger mobiler Ad-hoc-Netze zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Verfahren zum Erzeugen eines Zeitstempels in einem an einem Fahrzeug-Ad-hoc-Netzwerk teilnehmenden Fahrzeug, das mit dem Zeitstempel einem in einer Nachricht versendeten Ereignis eine Uhrzeit zuordnet, die durch Fortschreiben einer aus einem GNSS-Signal genannten globalen Satellitennavigationssignal ableitbaren globalen Zeitbasis erzeugt wird, umfassend Prüfen, ob ein GNSS-Signal empfangbar ist, und Erzeugen der Uhrzeit basierend auf einer lokalen Zeitbasis, wenn eine ungenügende Anzahl globaler Satellitennavigationssignale zum Ableiten der globalen Zeitbasis verfügbar ist.

Dem angegebenen Verfahren liegt die Überlegung zugrunde, dass Nachrichten, oder auch Botschaften genannt, die über ein Fahrzeug-Ad-Hoc-Netzwerk, wie beispielsweise dem eingangs genannten Car2X-Netzwerk übertragen werden, in der Regel dazu verwendet werden, den Teilnehmern des Fahrzeug-Ad-Hoc-Netzwerkes, also andere Fahrzeuge, auf Ereignisse wie Unfälle, Staus, Baustellen, ... mitzuteilen. Damit diese Ereignisse jedoch von den anderen Fahrzeugen richtig bewertet und weiterverarbeitet werden können, benötigen Sie einen zeitlichen Bezug, der für alle Fahrzeuge gleich sein muss. Ohne diesen zeitlichen Bezug zum Auftreten des Ereignisses sind ausgesendete Nachrichten in dem Fahrzeug-Ad-Hoc-Netzwerk daher ohne Nutzen, da sie nicht von den anderen Teilnehmern nicht ausgewertet werden können.

Dieser zeitliche Bezug wird durch die erzeugten Zeitstempel hergestellt, die den in den Nachrichten versendeten Ereignissen die Uhrzeit zuordnen, an denen das Ereignis aufgetreten ist. Damit die Uhrzeit aber von allen Teilnehmern des Fahrzeug-Ad-Hoc-Netzwerkes gleich interpretiert wird, muss die Uhrzeit aller Teilnehmer des Fahrzeug-Ad-Hoc-Netzwerkes untereinander synchronisiert sein. Dazu wird eine globale Zeitbasis verwendet, basierend auf der sich alle Teilnehmer des Fahrzeug-Ad-Hoc-Netzwerkes eine einheitliche Uhrzeit erzeugen können. Die globale Zeitbasis kann beispielsweise die koordinierte Weltzeit (auch UTC, von englisch Coordinated Universal Time) sein.

Eine derartige systemübergreifende, globale Zeitbasis wird im Rahmen GNSS genannter globaler Satellitennavigationssysteme verwendet. Hierbei senden einzelne Satelliten eines globalen Satellitennavigationssystems GNSS-Signale genannte Positionssignale aus, wobei der Empfänger aus den Laufzeitunterschieden dieser GNSS-Signale mittels Trilateration seine globale Position eindeutig bestimmen kann. Die globale Zeitbasis die mit GNSS-Signalen übertragen und durch die Positionslösung bestimmt wird, ist daher weltweit einheitlich. Derartige globale Satellitennavigationssysteme sind beispielsweise das Global Positioning System, kurz GPS, der Vereinigten Staaten von Amerika, das 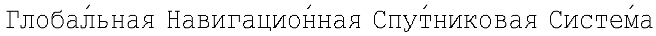 , kurz GLONASS der Russischen Föderation, das Galileo-System der Europäischen Union oder das Beidou-System aus China und bestens bekannt.

Damit die Uhrzeit und damit der Zeitstempel für die Kommunikation in dem Fahrzeug-Ad-hoc-Netzwerk verwendet werden kann, muss die globale Zeitbasis nach dem Systemstart des Fahrzeuges und damit eines Transmitters, der die Teilnahme am Fahrzeug-Ad-Hoc-Netzwerk ermöglicht, zunächst über das GNSS bestimmt werden. Im Rahmen des GPS beispielsweise wird als globale Zeitbasis beispielsweise die oben genannte koordinierte Weltzeit verwendet, zu deren Bestimmung über GPS der Empfang von mindestens vier GPS-Signalen notwendig ist. Ist die globale Zeitbasis einmal bestimmt, kann der Transmitter die Uhrzeit bis zu einem erneuten GNSS-Empfang durch extrapolieren fortschreiben. Extrapolationsfehler, die durch einen Uhrendrift beispielsweise durch Quarzfehler entstehen und über Kurzzeit wenige Pikosekunden betragen, sind dabei vernachlässigbar.

Ist jedoch zum Systemstart kein ausreichender GNSS-Empfang vorhanden, weil das Fahrzeug im Tunnel oder im Parkhaus gestartet wird, steht auch keine globale Zeitbasis zur Verfügung, basierend auf der die Uhrzeit erzeugt werden könnte. Damit kann das Fahrzeug auch nicht am Fahrzeug-Ad-hoc-Netzwerk teilnehmen, weil die vom Fahrzeug versendeten Nachrichten ohne zeitlichen Bezug wie bereits erläutert nutzlos sind.

Während relative Werte, wie die Beschleunigung des Fahrzeuges, Heading-Änderung, die Geschwindigkeit und/oder Positionsänderung des Fahrzeuges durch fahrzeugeigene (relative) Sensoren bestimmbar sind, ist dies für absolute Werte wie die genannte Uhrzeit, die Position des Fahrzeuges und/oder das Heading des Fahrzeuges nicht möglich. Einige dieser absoluten Werte, wie die Position und das Heading des Fahrzeuges könnten zwar abgespeichert und - nach anfänglicher Plausibilisierung - weiterverwendet werden. Dies gilt jedoch nicht für die Uhrzeit.

Hier greift das angegebene Verfahren mit der Überlegung an, statt der nicht verfügbaren globalen Zeitbasis vorrübergehend eine lokale Zeitbasis zu verwenden, wobei hier eventuell Uhrenfehler aufgrund der verschiedenen Zeitbasen zwischen den einzelnen am Fahrzeug-Ad-hoc-Netzwerk teilnehmenden Fahrzeugen in Kauf genommen werden müssen. Auf diese Weise kann das Fahrzeug in der Zeit, in der keine globale Zeitbasis zur Verfügung steht, trotzdem am Fahrzeug-Ad-hoc-Netzwerk teilnehmen und sowohl auswertbare Nachrichten im Netzwerk versenden als auch selbst empfangene Nachrichten auswerten.

Wenn das Fahrzeug vor dem Prüfen, ob das GNSS-Signal empfangbar ist, gestartet wird kann die lokale Zeitbasis in einer Weiterbildung des angegebenen Verfahrens beispielsweise eine vor dem Starten des Fahrzeuges fortgeschriebene Uhrzeit sein. Dies würde zwar voraussetzen, dass das System zum Erzeugen der Uhrzeit auch dann in Betrieb bleibt, wenn das Fahrzeug selbst abgestellt ist und nicht betrieben wird, um die Uhrzeit fortschreiben zu können. In diesem Fall könnte aber auch auf das Abspeichern von Daten verzichtet werden, da das System durchgängig aktiv bleibt und sämtliche Veränderungen detektiert. Dies könnte gegebenenfalls auch einen erhöhten Stromverbrauch im abgeschalteten Zustand des Fahrzeuges rechtfertigen, wobei auch besondere Anforderungen an einen Systemneustart des Fahrzeuges notwendig werden könnten. Ob diese Weiterbildung praktikabel ist, oder nicht, könnte auch davon abhängig, wie stark der bei längeren Zeiträumen entstehende Uhrzeitfehler aufgrund des Uhrendrifts ist.

Alternativ oder zusätzlich könnte die lokale Zeitbases auch aus einer Uhr abgefragt werden, die eine lokale Uhrzeit ausgibt. Dabei spielt es keine Rolle, ob sich diese Uhr im Fahrzeug selbst, in einem anderen Teilnehmer des Fahrzeug-Ad-hoc-Netzwerkes oder an einer beliebigen anderen Stelle befindet. Auch die Übertragung der lokalen Uhrzeit aus dieser Uhr an das Fahrzeug spielt keine Rolle. Beispielsweise könnte die Uhrzeit aus einer in dem Fahrzeug, aber außerhalb des oben genannten Transmitters verbauten Uhr abgefragt werden, die schlechthin als Fahrzeug-Uhr bekannt ist. Diese Uhr wird in der Regel auch im abgeschalteten Zustand des Fahrzeuges fortgeführt und kann daher als lokale Zeitbasis verwendet werden.

Um sicherzugehen, dass die lokale Zeitbasis aus der Fahrzeug-Uhr nicht in unbekannter Weise verstellt ist, kann eine Weiterbildung des angegebenen Verfahrens folgende Schritte umfassen: Abfragen einer Modifikationsinformation, die eingerichtet ist, einen Modifikationszeitpunkt anzuzeigen, an dem die Uhr zum letzten Mal modifiziert wurde und Verhindern des Erzeugens der Uhrzeit durch Fortschreiben der lokalen Uhrzeit, wenn der Modifikationszeitpunkt nach einem letzten Empfangszeitpunkt liegt, an dem zum letzten Mal ein GNSS-Signal empfangen wurde. Wird die Uhrzeit aus der Fahrzeug-Uhr mit dem letztmaligen Empfang des GNSS-Signals als gültig bestätigt, so kann durch die Modifikationsinformation eine Verstellung der Fahrzeug-Uhr angedeutet werden, im Rahmen derer die Uhrzeit der Fahrzeug-Uhr als ungültig und somit als nicht für die Verwendung als lokale Zeitbasis geeignet gekennzeichnet werden kann. Alternativ kann die Änderung, beispielsweise bei der Umstellung auf Sommerzeit- und Winterzeit in die Modifikationsinformation mit aufgenommen werden, wobei dann statt des Verhinderns des Erzeugens der Uhrzeit durch Fortschreiben der lokalen Uhrzeit die als lokale Zeitbasis verwendete Uhrzeit aus der Fahrzeug-Uhr um die Änderung korrigiert werden kann.

In einer anderen Weiterbildung des angegebenen Verfahrens kann die die lokale Zeitbasis bereitstellende Uhr eingerichtet sein, die lokale Uhrzeit in einem Funksignal zu übertragen. Dieses Funksignal kann beispielsweise von einem anderen Teilnehmer des Fahrzeug-Ad-Hoc-Netzwerkes gesendet werden. Alternative Quellen für das Funk-Signal währen eine Telefon- und/oder Internetverbindung, ein Radiosignal, ein Funkuhr-Signal, wie das DCF77-Signal oder ein Signal aus einem anderen Funknetzwerk, wie WLAN.

In besonders günstiger Weise kann die lokale Uhrzeit im Rahmen des angegebenen Verfahrens in einem Funksignal von einem anderen Teilnehmer des Fahrzeug-Ad-hoc-Netzwerkes übertragen werden. Hierzu wären weder weitere Zusatzhardware noch besondere Anforderungen an die Umgebung notwendig, denn die lokale Zeitbasis kann direkt über die Kommunikation im Fahrzeug-Ad-Hoc-Netzwerk anhand der ausgesandten/empfangenen Botschaften übertragen werden. Zwar müssten dazu weitere Teilnehmer des Fahrzeug-Ad-Hoc-Netzwerkes in der Umgebung sein, jedoch macht ein Fahrzeug-Ad-Hoc-Netzwerk ohne weitere Teilnehmer ohnehin in den meisten Fällen praktisch keinen Sinn. Zudem kann im Rahmen der vorliegenden Weiterbildung des angegebenen Verfahrens die Genauigkeit der Zeitinformation der so erhaltenen lokalen Zeitbasis als ausreichend hoch angenommen werden, weil davon ausgegangen werden kann, dass der vom anderen Teilnehmer des Fahrzeug-Ad-Hoc-Netzwerk übertragenen lokalen Zeitbasis die globale Zeitbasis zugrunde liegt.

Um die Übertragung der lokalen Zeitbasis zwischen den Teilnehmern des Fahrzeug-Ad-Hoc-Netzwerkes zu realisieren, wären prinzipiell zwei Grundprinzipien denkbar.

Im Rahmen eines Grundprinzips umfasst das angegebene Verfahren den Schritt Anfordern des Funksignals mit der lokalen Zeitbasis von dem anderen Teilnehmer des Fahrzeug-Ad-hoc-Netzwerkes. Hierfür könnten spezielle Synchronisationsbotschaften zwischen den Teilnehmern des Fahrzeug-Ad-Hoc-Netzwerkes ausgetauscht werden. Diese Synchronisationsbotschaften stellen sicher, dass das Fahrzeug seine Zeitbasis in dem Fahrzeug-Ad-Hoc-Netzwerk auch dann basierend auf der Zeitbasis anderer Teilnehmer des Fahrzeug-Ad-Hoc-Netzwerkes synchronisieren kann, wenn in diesem Netzwerk keine Payload-Daten versendet werden. Prinzipiell könnten diese Synchronisationsbotschaften in beliebiger Weise, beispielsweise auch in festen Abständen versendet werden. Durch die Anforderung des Funksignals mit der lokalen Zeitbasis wird die Kanallast dann aber reduziert. Man kann hierbei auch von einer asynchronen Übertragung des Funksignals wird mit der lokalen Zeitbasis sprechen. Der asynchrone Austausch der oben genannten Synchronisationsbotschaften könnte beispielsweise an das PTP genannte Precision Time Protocol angelehnt werden.

Im Rahmen des zweiten Grundprinzips ist die lokale Uhrzeit ein vom anderen Teilnehmer des Fahrzeug-Ad-hoc-Netzwerkes erzeugter Zeitstempel. Hierbei sollten möglichst mehrere Zeitstempel verschiedener Teilnehmer des Fahrzeug-Ad-Hoc-Netzwerkes bei der Erfassung der lokalen Zeitbasis berücksichtigt werden, weil so der Uhrzeitfehler in der lokalen Zeitbasis gegenüber der tatsächlichen globalen Zeitbasis minimiert werden kann. Anhand der empfangenen Nachrichten aus dem Fahrzeug-Ad-Hoc-Netzwerk kann dann mittels der empfangenen Zeitstempel ggf. gewichtet entsprechend einer in den Nachrichten angegebenen Genauigkeit des jeweiligen Zeitstempels sowie einer typischen Signallaufzeit eine grobe Zeitschätzung der aktuellen auf der globalen Zeitbasis basierenden Uhrzeit im Fahrzeug-Ad-Hoc-Netzwerk und damit der lokalen Zeitbasis durchgeführt werden. Diese derart bestimmte lokale Zeitbasis erreicht zwar nicht die hohe Genauigkeit der globalen Zeitbasis, sie liegt jedoch innerhalb einer Toleranz, die mit der bereits vorhandenen Hardware eine Zeitsynchronisierung mit ausreichender Genauigkeit für die Teilnahme am Fahrzeug-Ad-Hoc-Netzwerk ermöglicht.

Gemäß einem weiteren Aspekt der Erfindung umfasst ein Verfahren zum Lokalisierend eines Fahrzeuges basierend auf einem in dem Fahrzeug von einem Satelliten empfangenen globalen Navigationssatellitensystem-Signal, nachstehend GNSS-Signal genannt, die Schritte Bestimmen einer lokalen Zeitbasis mit einem der vorstehenden Verfahren; Empfangen des GNSS-Signals des Satelliten; und Lokalisierend des Fahrzeuges basierend auf der lokalen Zeitbasis und dem GNSS-Signal.

Dabei kann die Zeitbasis direkt oder indirekt zur Realisierung eines Warmstarts des Receivers verwendet werden, indem sie beispielsweise zunächst in die globale Zeitbasis umgewandelt wird und zusammen mit weiteren Informationen, wie Almanach und Position, an den GNSS Receiver übermittelt wird. Die Auswahl selbst kann beispielsweise analog zum assisted global positioning system, A-GPS genannt, erfolgen und beschleunigt die Initialisierung der Lokalisierung über ein GNSS deutlich.

Gemäß einem weiteren Aspekt der Erfindung ist eine Steuervorrichtung eingerichtet, ein Verfahren nach einem der vorstehenden Ansprüche durchzuführen.

In einer Weiterbildung der angegebenen Steuervorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem anderen Aspekt der Erfindung umfasst ein Fahrzeug eine angegebene Steuervorrichtung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine Prinzipdarstellung eines auf einer Straße fahrenden Fahrzeuges,
Fig. 2 eine Prinzipdarstellung eines Teils des Fahrzeuges der Fig. 1, der zum Versenden von Car2X-Nachrichten vorgesehen ist,
Fig. 3 eine Prinzipdarstellung eines alternativen Teils des Fahrzeuges der Fig. 1, der zum Versenden von Car2X-Nachrichten vorgesehen ist, und
Fig. 4 eine Prinzipdarstellung eines noch alternativen Teils des Fahrzeuges der Fig. 1, der zum Versenden von Car2X-Nachrichten vorgesehen ist, zeigen.

In den Figuren werden gleiche technische Elemente mit gleichen Bezugszeichen versehen und nur einmal beschrieben.

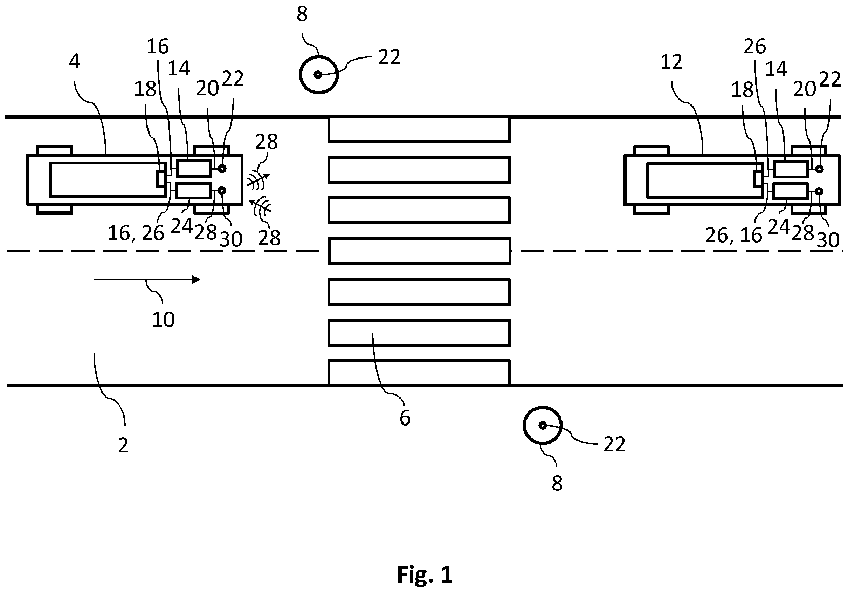

Es wird auf Fig. 1 Bezug genommen, die eine Prinzipdarstellung eines auf einer Straße 2 fahrenden Fahrzeuges 4 zeigt.

In der vorliegenden Ausführung soll sich auf der Straße 2 eine Fußgängerüberführung 6 befinden, an der mittels einer Ampel 8 geregelt wird, ob das Fahrzeug 4 auf der Straße 2 die Fußgängerüberführung 6 überqueren darf oder ein nicht weiter dargestellter Fußgänger auf der Fußgängerüberführung 6 die Straße 2.

In einer Fahrtrichtung 10 vor dem Fahrzeug 4 ist in Fig. 1 ein weiteres Fahrzeug 12 dargestellt, das sich in die gleiche Fahrtrichtung 10 bewegt, in die sich auch das Fahrzeug 4 bewegt.

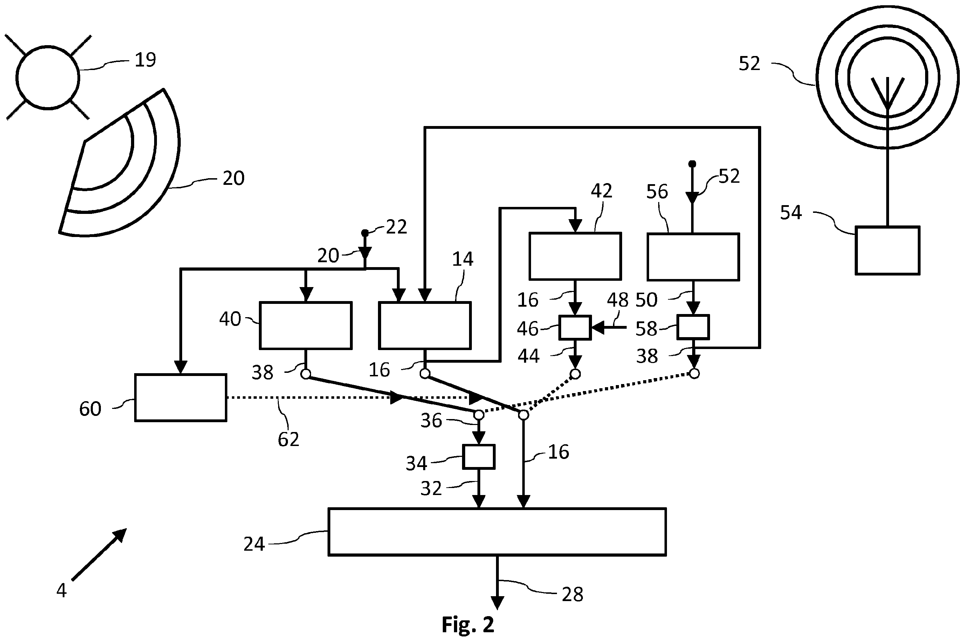

Das Fahrzeug 4 weist in der vorliegenden Ausführung einen Empfänger 14 für ein globales Satellitennavigationssystem, nachstehend GNSS-Empfänger 14 genannt auf, über den das Fahrzeug 4 in einer an sich bekannten Weise Zeit- und Positionsdaten in Form seiner absoluten geographischen Lage 16 bestimmen und beispielsweise im Rahmen eines Navigationssystems 18 nutzen kann, um diese auf einer nicht weiter dargestellten geographischen Karten anzuzeigen. Entsprechende aus einem in Fig. 2 bis 4 gezeigten Satelliten 19 versendete Signale 20 des Globalen Satellitennavigationssystems, nachstehend GNSS-Signale 20 genannt, können beispielsweise über eine entsprechende GNSS-Antenne 22 empfangen und in an sich bekannter Weise an den GNSS-Empfänger weitergeleitet werden.

Das Fahrzeug weist in der vorliegenden Ausführung ferner einen Transmitter 24 auf, über den das Fahrzeug mit dem weiteren Fahrzeug 12 und/oder der Ampel 8 zur einem Car2X-Netzwerk genannten Fahrzeug-Ad-hoc-Netzwerk zusammenschließen und Nachrichten 28 austauschen kann, in denen die Fahrzeuge 4, 12 sich gegenseitig über auftretende Ereignisse informieren können. Dieser Transmitter 24 soll zur Abgrenzung gegenüber dem GNSS-Empfänger 14 nachstehend Car2X-Transmitter 24 genannt werden. Ein Ereignis, das regelmäßig in derartigen Nachrichten 28 ausgetauscht wird, sind die eigenen Positionsdaten der jeweiligen Fahrzeuge 4, 12 in Form ihrer absoluten geographischen Lage 16, 26. Das heißt, dass das Fahrzeug 4 mit seinem Car2X-Transmitter 24 seine absolute geographische Lage 16 an das weiter Fahrzeug 12 in einer Nachricht 28 übertragen und vom weiteren Fahrzeug 12 in einer Nachricht 28 seine geographische Lage 26 empfangen kann. Der Empfang und das Versenden dieser Nachrichten 28 geschehen dabei über eine Car2X-Antenne 30.

An dieser Stelle sei darauf hingewiesen, dass im Rahmen eines Car2X-Netzwerkes zahlreiche andere Ereignisse, unter den einzelnen Netzwerkteilnehmer ausgetauscht werden können, die in regionenspezifischen Standards spezifiziert sind. Die austauschbaren Nutzdaten unter anderem im Rahmen der ETSI TC ITS bei ETSI in Europa und im Rahmen der IEEE 1609 bei IEEE sowie bei SAE in den Vereinigten Staaten von Amerika standardisiert. Der Übersichtlichkeit halber soll jedoch das Fallbeispiel herangezogen werden, dass die absoluten Lagen 16, 26 übermittelt werden, die einzelnen Teilnehmer des Car2X-Netzwerkes beispielsweise auf den Navigationssystemen 18 angezeigt werden können.

Schließlich kann auch die Ampel 8 eingerichtet sein, ihre absolute geographische Lage über eine Car2X-Antenne 22 in einer nicht weiter dargestellten Weise zu senden. Zwar könnte die absolute geographische Lage der Ampel 8 über ein zuvor genanntes GNSS-System bestimmt werden, da sich die Ampel 8 jedoch nicht bewegt, kann ihre absolute geographische Lage einmal fest bestimmt und beispielsweise in einem internen Speicher der Ampel 8 fest hinterlegt werden, so dass auf ein eigenes kostenintensives GNSS-System verzichtet werden kann.

Damit die von den Fahrzeugen 4, 12 in den Nachrichten 28 versendeten Ereignisse, wie ihre geographischen Lagen 16, 26 auch von den Empfängern des Car2X-Netzwerkes sinnvoll ausgewertet muss zusätzlich zu diesen Ereignissen auch eine in Fig. 2 angedeutete Uhrzeit 32 bekannt sein, zu dem das in der Nachricht 28 enthaltene Ereignis stattgefunden hat. Am Beispiel der geographischen Lage 16 des Fahrzeuges 4 heißt das, dass in der Nachricht 28 zusätzlich übermittelt werden muss, zu welcher Uhrzeit 32 sich das die Nachricht 28 versendende Fahrzeug 4 an der versendeten geographischen Lage 16 befunden hat.

Technisch kann die Uhrzeit 32 durch einen Zeitgeber 34 vorgegeben werden. Derartige Zeitgeber 34 können jedoch lediglich Zeitdifferenzen mittels schwingungsfähigen Systemen, wie einem Schwingquarz oder ähnlichem bestimmen. Um die Uhrzeit 32 zu generieren muss dem Zeitgeber 34 jedoch eine Zeitbasis 36 vorgegeben werden, auf die bezogen er die Uhrzeit 32 ausgeben kann. Damit die vom Zeitgeber 34 ausgegebene Uhrzeit 32 von allen im Car2X-Netzwerk kommunizierenden Teilnehmer einheitlich verwendet wird, sollte die Zeitbasis 36 für alle am Car2X-Netzwerk teilnehmenden Teilnehmer gleich vorgegeben werden. Eine derartige globale Zeitbasis 36, die überall auf der Welt gleich interpretiert wird, lässt sich in den GNSS-Signalen 20 finden, denn in dem GNSS-System versenden mehrere Satelliten entsprechende GNSS-Signale 20 mit einer Uhrzeit, wobei der GNSS-Empfänger 14 sich die absolute Lage 16 des Fahrzeuges 4 in an sich bekannter Weise durch Trilateration verschiedener Laufzeitunterschiede der einzelnen GNSS-Signale 20 ableiten kann. Ist daher die absolute Lage 16 des Fahrzeuges 4 aus den einzelnen GNSS-Signalen 20 bekannt, kann dann über die Laufzeit eines einzelnen GNSS-Signals 20 auf die vom entsprechenden GNSS-Satelliten vorgegebene Uhrzeit zurückgerechnet werden, die dann wiederrum als globale Zeitbasis 38 für die Uhrzeit 32 verwendet werden kann.

Prinzipiell kann diese Bestimmung der globalen Zeitbasis 38 ebenfalls im GNSS-Empfänger 14 erfolgen. Der Übersichtlichkeit halber ist in Fig. 2 eine zum GNSS-Empfänger 14 eigentlich redundante Einrichtung 40 zur Vorgabe der globalen Zeitbasis 38 angedeutet.

Im Regelfall wird diese globale Zeitbasis 38 dem Zeitgeber 34 als Zeitbasis 36 zugeführt. Wenn dies in allen Teilnehmern 4, 8, 12 des Car2X-Netzwerkes geschieht, ist garantiert, dass die so erzeugte Uhrzeit 32 in allen Teilnehmern 4, 8, 12 synchron läuft und die im Car2X-Netzwerk versendeten Ereignisse zeitlich richtig eingeordnet werden können.
Wurde die Zeitbasis einmalig korrekt initialisiert, so kann auch bei Abriss der GNSS-Signale, die globale Zeitbasis anhand der fortlaufenden Systemzeit weiter fortgeführt werden.

Problematisch ist jedoch, wenn zu wenige GNSS-Signale 20 und damit auch keine globale Zeitbasis 38 zur Verfügung stehen. Wenn beispielsweise das Fahrzeug 4 in einem das oder die GNSS-Signale 20 abschirmenden Parkhaus gestartet wird, dann kann weder die globale Lage 16 noch die Uhrzeit 32 bestimmt werden, weil keine globale Zeitbasis 38 vorhanden ist.

Hier wird im Rahmen des vorliegenden Ausführungsbeispiels vorgeschlagen, die absolute Position 16 des Fahrzeuges 4 vor dem Abschalten des Fahrzeuges 4 in einem Speicher 42 zu hinterlegen. Nach dem Starten des Fahrzeuges 4 kann dann der Speicher 42 ausgelesen werden. Stellt sich nach einer Plausibilisierung heraus, dass sich das Fahrzeug 4 immer noch an der im Speicher 42 hinterlegten absoluten Lage 16 befinden muss, dann wird diese absolute Lage 16 als Referenzlage zur Berechnung der tatsächlichen Lage 44 beispielsweise in einem Lageschreiber 46 basierend auf der sensorisch erfassbaren Lageänderung 48 des Fahrzeuges 4 weiter verwendet, bis das oder die GNSS-Signale 20 wieder verfügbar sind. Diese tatsächliche Lage 42 wird dann zum Generieren der Nachrichten 28 verwendet.

Zur Generierung der Uhrzeit 32 wird stattdessen auf eine lokale Zeitbasis 50 zurückgegriffen. Diese kann aus einer beliebigen Quelle abgeleitet werden. Im Gegensatz zur globalen Zeitbasis 38 gilt die lokale Zeitbasis 50 jedoch nur in dem Gebiet, in dem die lokale Zeitbasis 50 empfangen wurde und muss gegebenenfalls umgerechnet werden, um als Zeitbasis 36 für den Zeitgeber 34 verwendet werden zu können. Im Rahmen der Fig. 2 soll als Grundlage für die lokale Zeitbasis 50 ein Funksignal 52 aus einem Zeitzeichensender 54 empfangen werden, aus dem dann in einer entsprechenden Einrichtung 56 die lokale Zeitbasis 50 abgeleitet wird. Wenn der Zeitzeichensender 54 beispielsweise der DCF77 ist, dann würde als lokale Zeitbasis 50 die mitteleuropäische Zeit MEZ (englisch CET) empfangen werden, die dann zweckmäßigerweise in einer Umrechnungseinrichtung 58 in die vom GNSS-System verwendete globale Zeitbasis 38 zunächst umgerechnet werden sollte.

Im vorliegenden Ausführungsbeispiel ermittelt eine Detektionseinrichtung 60 rein illustrativ, ob und wie viele GNSS-Signale 20 vorhanden sind. Je nach Ergebnis wählt die Detektionseinrichtung 60 mit einem Schaltsignal 62 die aus dem GNSS-Signal 20 abgeleitete globale Zeitbasis 38 oder die aus dem Funksignal 52 abgeleitete globale Zeitbasis 38 als Zeitbasis 36 für den Zeitgeber 34 aus. Entsprechend wählt die Detektionseinrichtung auch die globale Lage 16 aus dem GNSS-Signal oder die berechnete tatsächliche Lage 44 mit dem Schaltsignal 62 aus.

Die aus der Umrechnungseinrichtung 58 ausgegebene globale Zeitbasis 38 kann auch dem GNSS-Empfänger 14 zugeführt werden, um analog zum assisted global postioning system genannten A-GPS die Lokalisierung der GNSS-Signale 20 mit dem GNSS-Empfänger 14 und seine Initialisierung zu beschleunigen.

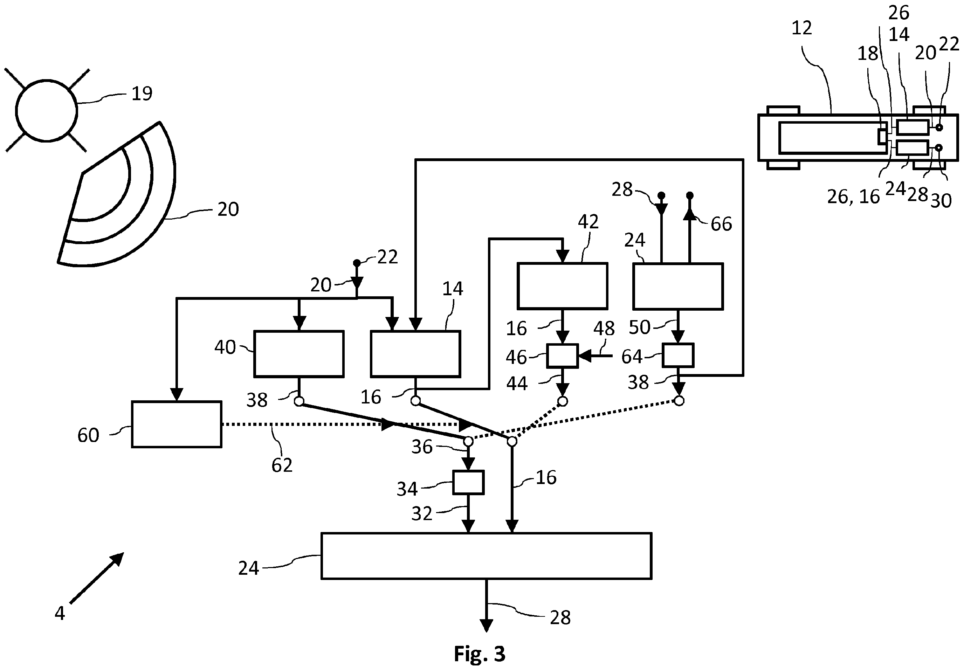

Im Rahmen der Fig. 3 kann die globale Zeitbasis 38 auch aus Nachrichten 28 abgeleitet werden, die vom weiteren Fahrzeug 12 empfangen werden. In Fig. 3 ist der GNSS-Transmitter 24 rein der Übersichtlichkeit halber auf zwei verschiedene Einheiten aufgesplittet dargestellt. Aus der Nachricht 28 wird zunächst die lokale Zeitbasis 50 des weiteren Fahrzeuges 12 empfangen. Diese lokale Zeitbasis 12 muss jedoch in einer Korrektureinrichtung 64 beispielsweise um Laufzeiten korrigiert werden, um die globale Zeitbasis 38 zu erhalten. Um den Datenverkehr zu verringern, kann das Fahrzeug 4 dem weiteren Fahrzeug 12 mit einer Anforderungsnachricht 64 auffordern, eine Nachricht mit der globalen Zeitbasis 38 zu schicken.

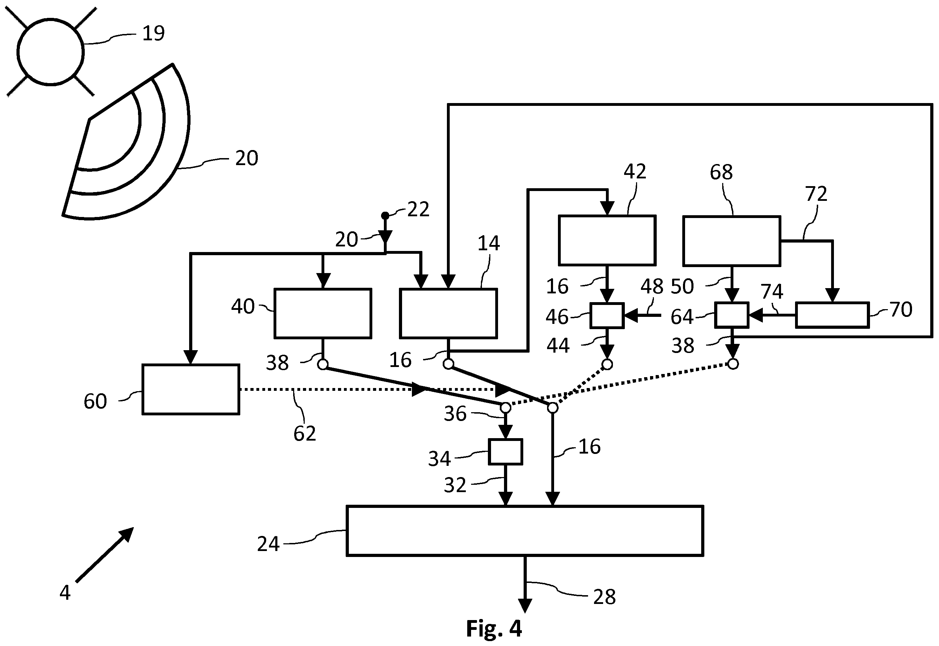

Im Rahmen der Fig. 4 kann auch eine Fahrzeuguhr 68 des Fahrzeuges 4 zum Ermitteln der globalen Zeitbasis 38 ausgelesen werden. Die Fahrzeuguhr 68 gibt eine lokale Zeitbasis 50 für das Fahrzeug aus, die dann wieder in der Korrektureinrichtung 64 beispielsweise von der mitteleuropäischen Zeit in die globale Zeitbasis 38 umgewandelt wird. In besonders günstiger Weise ist eine Manipulationsermittlungseinrichtung 70 vorgesehen, die aus der Fahrzeuguhr 38 eine Modifikationsinformation 72 abfragt. Geht aus der Modifikationsinformation 72 hervor, dass die Fahrzeuguhr 68 nach dem letzten Empfang des oder der GNSS-Signale 20 manipuliert wurde, wird die Umwandlung zwischen der lokalen Zeitbasis 50 in die globale Zeitbasis 50 mit einem Blockiersignal 74 geblockt.

## Patentansprüche

1. Verfahren zum Erzeugen eines Zeitstempels in einem an einem Fahrzeug-Ad-hoc-Netzwerk teilnehmenden Fahrzeug (4), das mit dem Zeitstempel einem in einer Nachricht (28) versendeten Ereignis (16) eine Uhrzeit (32) zuordnet, die durch Fortschreiben einer aus einem GNSS-Signal (20) genannten globalen Satellitennavigationssignal (20) ableitbaren globalen Zeitbasis (38) erzeugt wird, **gekennzeichnet durch** die Schritte:
- Prüfen, ob ein GNSS-Signal (12) empfangbar ist, und
- Erzeugen der Uhrzeit (32) basierend auf einer lokalen Zeitbasis (50), wenn eine ungenügende Anzahl globaler Satellitennavigationssignale (12) zum Ableiten der globalen Zeitbasis (38) verfügbar ist, wobei die lokale Zeitbasis (50)
- eine vor dem Starten des Fahrzeuges (4) fortgeschriebene Uhrzeit ist, wobei das Fahrzeug (4) vor dem Prüfen, ob das GNSS-Signal (4) empfangbar ist, gestartet wird,
und / oder
- aus einer Uhr (12, 54, 68) abgefragt wird, die eine lokale Uhrzeit ausgibt, wobei die lokale Uhrzeit in einem Funksignal (28) von einem anderen Teilnehmer (12) des Fahrzeug-Ad-hoc-Netzwerkes übertragen wird.

2. Verfahren nach Anspruch 1, umfassend:
- Abfragen einer Modifikationsinformation (74), die eingerichtet ist, einen Modifikationszeitpunkt anzuzeigen, an dem die Uhr (12, 54, 68) zum letzten Mal modifiziert wurde, und
- Verhindern des Erzeugens der Uhrzeit (38), wenn der Modifikationszeitpunkt nach einem letzten Empfangszeitpunkt liegt, an dem zum letzten Mal ein GNSS-Signal (12) empfangen wurde.

3. Verfahren nach Anspruch 1 oder 2, wobei die Uhr (12, 54) eingerichtet ist, die lokale Uhrzeit in einem Funksignal (28, 52) zu übertragen.

4. Verfahren nach einem der vorstehenden Ansprüche, umfassend Anfordern (66) des Funksignals (28) von dem anderen Teilnehmer (12) des Fahrzeug-Ad-hoc-Netzwerkes.

5. Verfahren nach einem der vorstehenden Ansprüche, wobei die lokale Uhrzeit ein vom anderen Teilnehmer (12) des Fahrzeug-Ad-hoc-Netzwerkes erzeugter Zeitstempel ist.

6. Verfahren zum Lokalisieren eines Fahrzeuges basierend auf einem in dem Fahrzeug von einem Satelliten (19) empfangenen globalen Navigationssatellitensystem-Signal (12), nachstehend GNSS-Signal (12) genannt, umfassend:
- Bestimmen einer lokalen Zeitbasis (50) mit einem Verfahren nach einem der vorstehenden Ansprüche 1 bis 5;
- Empfangen des GNSS-Signals (12) des Satelliten; und
- Lokalisieren des Fahrzeuges basierend auf der lokalen Zeitbasis (50) und dem GNSS-Signal (12).

7. Steuervorrichtung, die eingerichtet ist, ein Verfahren nach einem der vorstehenden Ansprüche durchzuführen.

## Claims

1. Method for generating a time stamp in a vehicle (4) participating in a vehicular ad hoc network, which vehicle uses the time stamp to assign to an event (16) sent in a message (28) a time (32) which is generated by updating a global timebase (38) derivable from a global navigation satellite signal (20), referred to as a GNSS signal (20), which method is **characterized by** the steps of:
- verifying whether a GNSS signal (12) can be received, and
- generating the time (32) on the basis of a local timebase (50) if there are an insufficient number of global navigation satellite signals (12) available to derive the global timebase (38), wherein the local timebase (50)
- is a time updated before the vehicle (4) is started, wherein the vehicle (4) is started before verifying whether the GNSS signal (4) can be received, and/or
- is retrieved from a clock (12, 54, 68) that outputs a local time, wherein the local time is transmitted in a radio signal (28) by another node (12) of the vehicular ad hoc network.

2. Method according to Claim 1, comprising:
- retrieving modification information (74), which is designed to indicate a modification time instant at which the clock (12, 54, 68) was last modified, and
- preventing the time (38) being generated if the modification time instant lies after a last receive time instant at which a GNSS signal (12) was last received.

3. Method according to Claim 1 or 2, wherein the clock (12, 54) is designed to transmit the local time in a radio signal (28, 52).

4. Method according to any of the preceding claims, comprising requesting (66) the radio signal (28) from the other node (12) of the vehicular ad hoc network.

5. Method according to any of the preceding claims, wherein the local time is a time stamp generated by the other node (12) of the vehicular ad hoc network.

6. Method for locating a vehicle on the basis of a global navigation satellite system signal (12), referred to below as a GNSS signal (12), received in the vehicle from a satellite (19), which method comprises:
- determining a local timebase (50) using a method according to any of the previous Claims 1 to 5;
- receiving the GNSS signal (12) from the satellite; and
- locating the vehicle on the basis of the local timebase (50) and the GNSS signal (12).

7. Control device, which is designed to implement a method according to any of the preceding claims.

## Revendications

1. Procédé de génération d'un horodatage dans un véhicule (4) participant à un réseau ad-hoc de véhicule, lequel procédé associe, par l'horodatage, à un événement (16) envoyé dans un message (28), un temps d'horloge (32) qui est généré par actualisation d'une base de temps mondiale (38) pouvant être déduite à partir d'un signal de positionnement par satellite mondial (20), dit signal GNSS (20), **caractérisé par** les étapes consistant à :
- vérifier si un signal GNSS (12) peut être reçu, et
- générer le temps d'horloge (32) sur la base d'une base de temps locale (50) lorsqu'un nombre insuffisant de signaux de positionnement par satellite mondiaux (12) est disponible pour déduire la base de temps mondiale (38), dans lequel la base de temps locale (50)
- est un temps d'horloge actualisé avant le démarrage du véhicule (4), dans lequel le véhicule (4) est démarré avant de vérifier si le signal GNSS (4) peut être reçu, et / ou
- une horloge (12, 54, 68) qui délivre un temps d'horloge local est interrogée, dans lequel le temps d'horloge local est transmis dans un signal radio (28) par un autre abonné (12) du réseau ad-hoc de véhicule.

2. Procédé selon la revendication 1, consistant à :
- demander une information de modification (74) qui est conçue pour indiquer un instant de modification lors duquel l'horloge (12, 54, 68) a été modifiée pour la dernière fois, et
- empêcher la génération du temps d'horloge (38) lorsque l'instant de modification est postérieur à un dernier instant de réception lors duquel un signal GNSS (12) a été reçu pour la dernière fois.

3. Procédé selon la revendication 1 ou 2, dans lequel l'horloge (12, 54) est conçue pour transmettre le temps d'horloge local dans un signal radio (28, 52).

4. Procédé selon l'une des revendications précédentes, consistant à demander (66) le signal radio (28) à l'autre abonné (12) du réseau ad-hoc de véhicule.

5. Procédé selon l'une des revendications précédentes, dans lequel le temps d'horloge local est un horodatage généré par l'autre abonné (12) du réseau ad-hoc de véhicule.

6. Procédé de localisation d'un véhicule sur la base d'un signal de positionnement par satellite mondial (12), ci-après dit signal GNSS (12), reçu dans le véhicule en provenance d'un satellite (19), consistant à :
- déterminer une base de temps locale (50) par un procédé selon l'une des revendications 1 à 5 précédentes ;
- recevoir le signal GNSS (12) en provenance du satellite ; et
- localiser le véhicule sur la base de la base de temps locale (50) et du signal GNSS (12).

7. Dispositif de commande conçu pour mettre en œuvre un procédé selon l'une des revendications précédentes.
